# EUROPEAN PATENT SPECIFICATION

(11) **EP 2 106 992 B1**
(45) Date of publication and mention of the grant of the patent: **15.09.2010**
(21) Application number: 09251045.2
(22) Date of filing: 03.04.2009
(51) Int. Cl.: B62J 6/02, B62J 17/02

(54) **Motorcycle front portion**
Vorderteil eines Motorrads
Partie avant d'une motocyclette

(30) Priority: 03.04.2008 JP 2008097495; 05.09.2008 JP 2008227912
(43) Date of publication of application: 07.10.2009
(73) Proprietor: Yamaha Hatsudoki Kabushiki Kaisha, Iwata-shi, Shizuoka-ken 438-8501 (JP)
(72) Inventor: Masumi, Oosumi, Shizuoka-ken, 438-8501 (JP); Naochika, Hashimoto, Shizuoka-ken, 438-8501 (JP)
(74) Representative: Meldrum, David James

(56) References cited:
- JP-A- 2007 030 809
- US-A1- 2006 023 462
- US-A1- 2007 047 249
- US-A1- 2007 058 381

## Description

### Field

The present invention relates to a vehicle body's front portion of a motorcycle including a front cowl.

### Background

In a motorcycle including a front cowl, headlights covered by transmissive covers are provided in portions of the front cowl. Depending on the case, in addition to a headlight light source, another light source functioning as, for example, a position lamp or the like is provided inside of each of the transmissive covers.

A known motorcycle is described in Japanese Unexamined Patent Application Publication No. 2007-261537

### Summary

In the conventional motorcycle described above, in order to enhance visibility of the headlight light source and the other light source, the distance between them is required to be increased. However, in the case where the distance between the headlight light source and the other light source is increased, a problem arises in that the weight of the transmissive cover covering them is increased.

In addition, in order to cause both the headlight light source and the other light source to be able to be ascertained at one glance or quickly, it is preferable that the light source and the other light source are inter-related in appearance, rather than that these light sources are provided at separate positions in a front cowl.

In the case of a lamp, such as a position lamp, generally a light reflection portion is provided on a rear side of the light source (so-called reflector type). However, there is also a less common case where only a light reflection portion is provided without a light source.

US2007/058381 A1 describes a vehicle headlight assembly and motorcycle utilizing the same in which a vehicle headlight assembly is designed to increase the productivity and which includes a light projecting group accommodated within a casing and including a plurality of light projecting units. Each of the light projecting units in turn includes a light emitting element, and a support member supported by and within the casing. The support members of each light projecting units cooperatively form a single holder. This document provides no teaching of a second transmissive cover configured as a separate body from a first transmissive cover, or of a motorcycle front portion comprising a connecting member provided on respective left and right sides and including a first peripheral portion that surrounds the first transmissive over, a second peripheral portion that surrounds the second transmissive cover, a connecting portion that interconnects between the first peripheral portion and the second peripheral portion.

JP 2007030809 A describes a lamp unit of a motorcycle aimed at being capable of realizing excellent head radiation by providing a large space between a position lamp and a lens while sufficiently ensuring the light distribution of the position lamp to the center side of a vehicle body.

US 2006/0023462 A1 describes a lamp unit adapted to be mounted above a front fender for a front wheel of a motor cycle including left and right head lamps, a single lens member positioned forwardly of and covering the left and right head lamps and a mirror finished body positioned rearwardly of the lens member.

US2007/0047249 A1 describes a lighting unit for a vehicle that aims to expand a light emitting range without increasing a size of light source, in a lighting unit for a vehicle using a projector lamp.

The present invention is made in view of known systems and the above circumstances. The inventors have recognized that it may be advantageous to provide a motorcycle front portion in which, while visibilities of a headlight light source and a light reflection portion are enhanced, an increase in the weight of a transmissive cover can be minimized, and the headlight light source and the light reflection portion can easily be ascertained at one glance.

Accordingly, viewed from one aspect, the present invention can provide a motorcycle front portion comprising: a front cowl configured to cover a front side of a vehicle body; a left headlight light source provided on a left side of the motorcycle front portion; a right headlight light source provided on a right side of the motorcycle front portion, with the left and right headlight light sources sandwiching a center of the front cowl in a vehicle width direction; a first transmissive cover having transmissivity and provided on a front side of each headlight light source; a left light reflection portion provided apart from the left headlight light source to an outer side in the vehicle width direction on the left side of the motorcycle front portion; a right light reflection portion provided apart from the right headlight light source to an outer side in the vehicle width direction on the right side of the motorcycle front portion; and a second transmissive cover provided on a front side of each light reflection portion; **characterized in that**: the second transmissive cover is configured as a separate body from the first transmissive cover on each of the left and right sides of the motorcycle front portion; and a left connecting member and a right connecting member are provided on the left and right sides respectively of the motorcycle front portion and each connecting member includes a first peripheral portion that surrounds the respective first transmissive cover, a second peripheral portion that surrounds the respective second transmissive cover, and a connecting portion that interconnects between the first peripheral portion and the second peripheral portion.

The invention can also provide a motorcycle including such a motorcycle front portion.

By providing a transmissive cover individually to a headlight light source and the light reflection portion, an increase in the weight of the transmissive cover can be minimized even in the case where the distance between the headlight light source and the light reflection portion is increased: Further, by providing the transmissive cover as a separate body, the visibility of the headlight light source and the light reflection portion can be expected to be further improved. Further, by providing the connecting member, the headlight light source and the light reflection portion can easily be ascertained at one glance.

### Brief Description of the Drawings

For a better understanding of the invention and to show how the same may be carried into effect reference is now made by way of example to the accompanying drawings in which:
FIG. 1 is a side view of a motorcycle of one embodiment;
FIG. 2 is a front view of the motorcycle of the one embodiment;
FIG. 3 is an explanatory exploded perspective view showing a mounting structure of a headlight portion;
FIG. 4 is a front view of the headlight portion including a cover mounted thereto;
FIG. 5 is a front view of the headlight portion;
FIG. 6 is a front view of the cover;
FIG. 7 is a cross-sectional view taken along the line VII-VII of FIG. 6;
FIG. 8 is an explanatory plan view showing the relation between the headlight portion and ducts;
FIG. 9 is an explanatory side view showing the relation between the headlight portion and the ducts;
FIG. 10 is a cross-sectional view taken along the line X-X of FIG. 2; and
FIG. 11 is a cross-sectional view taken along the line XI-XI of FIG. 4.

While the invention is susceptible to various modifications and alternative forms, specific embodiments are shown by way of example in the drawings and are herein described in detail. It should be understood, however, that drawings and detailed description thereto are not intended to limit the invention to the particular form disclosed, but on the contrary, the invention is to cover all modifications, equivalents and alternatives falling within the scope of the present invention as defined by the appended claims.

### Specific description

Embodiments of the present invention will now be described with reference to the drawings.

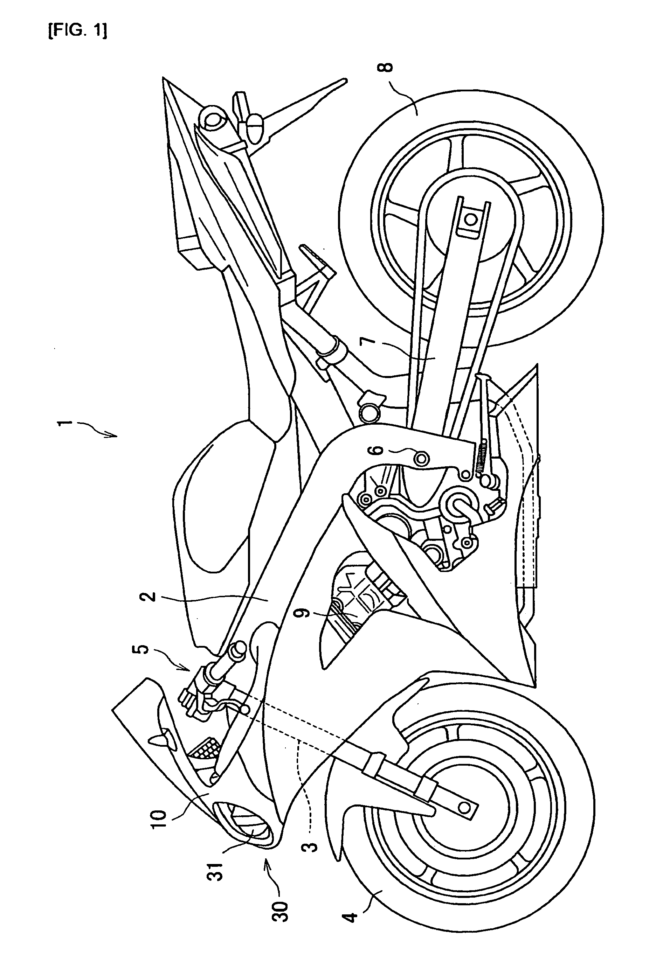

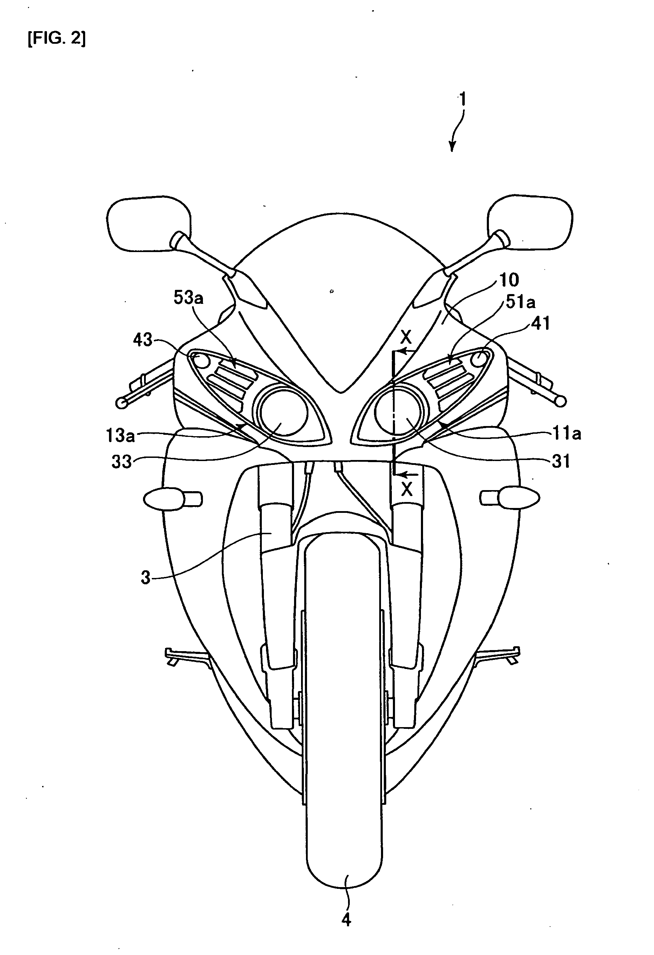

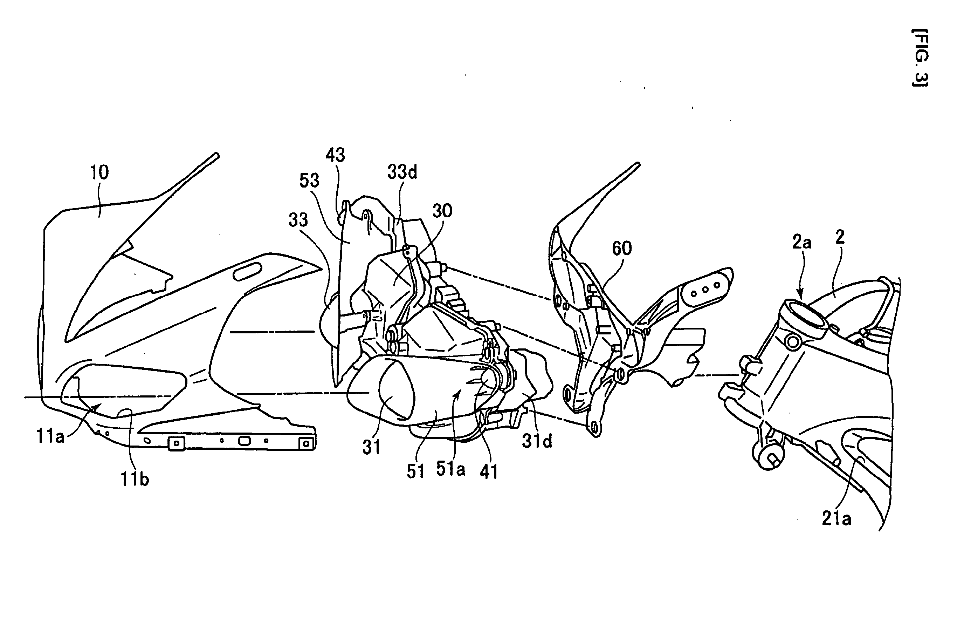

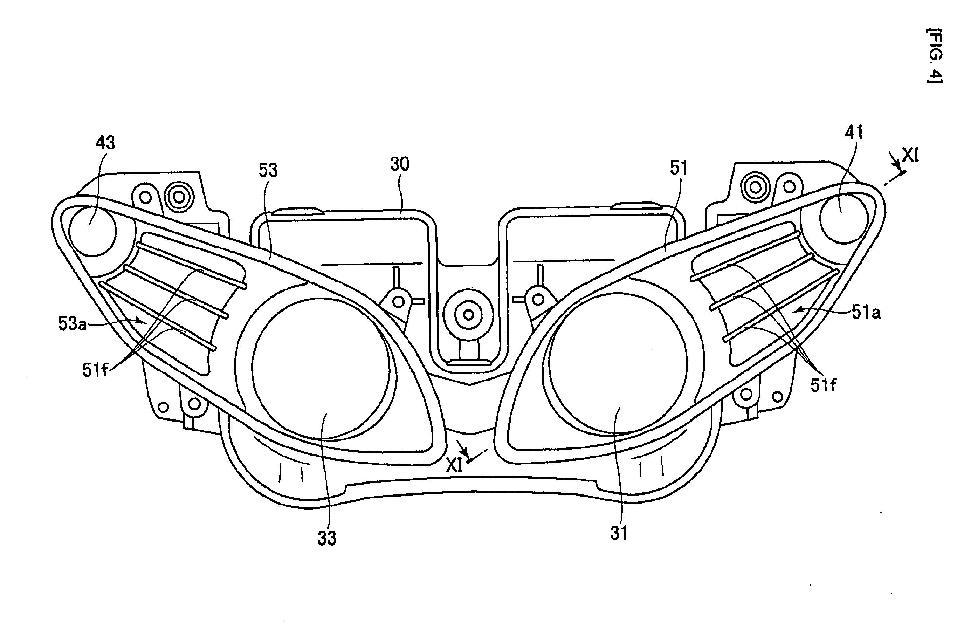

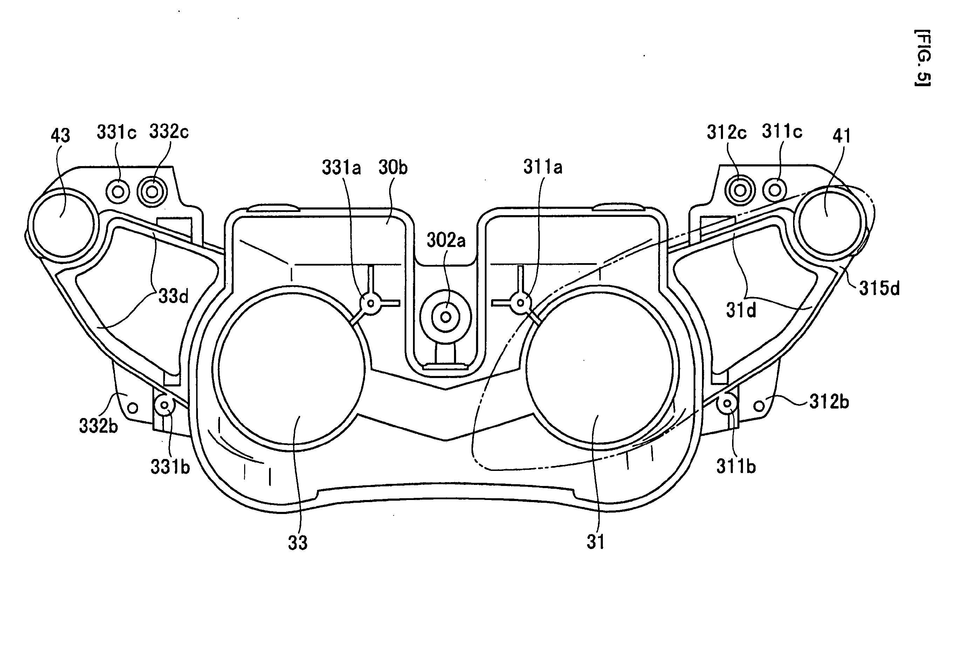

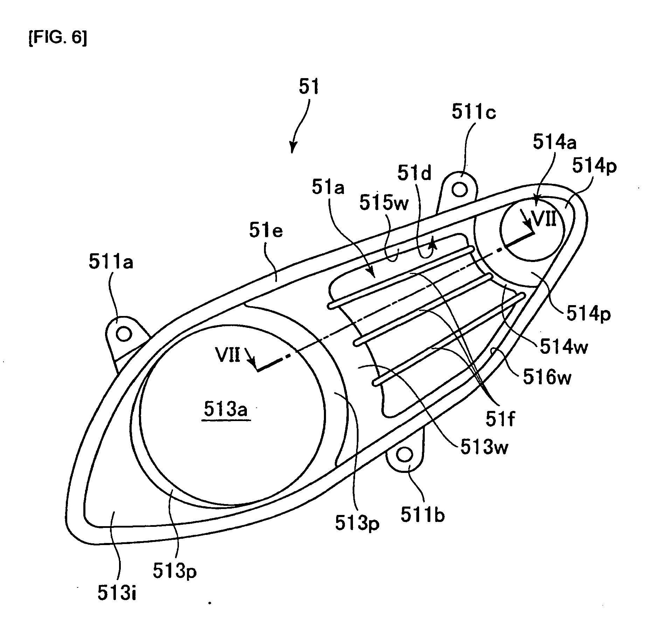

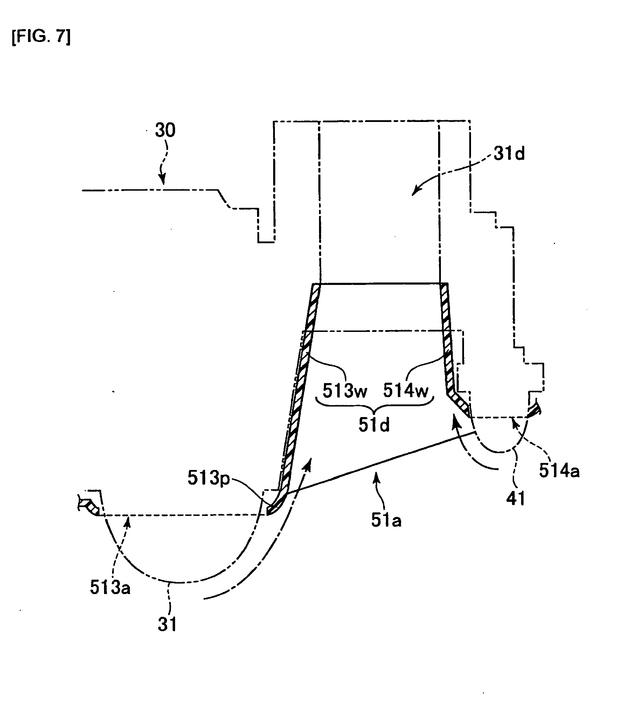

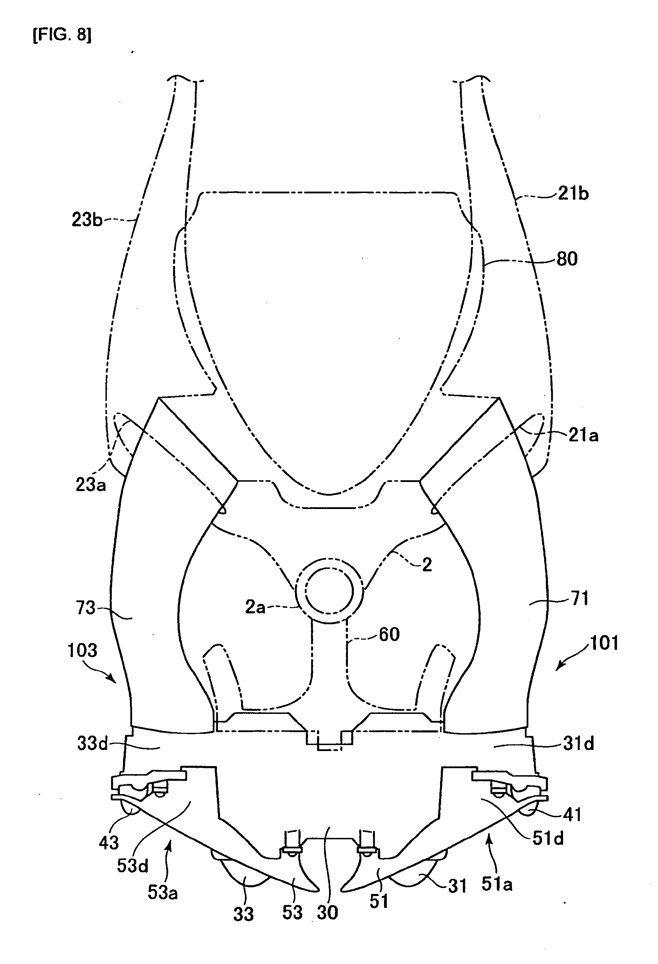

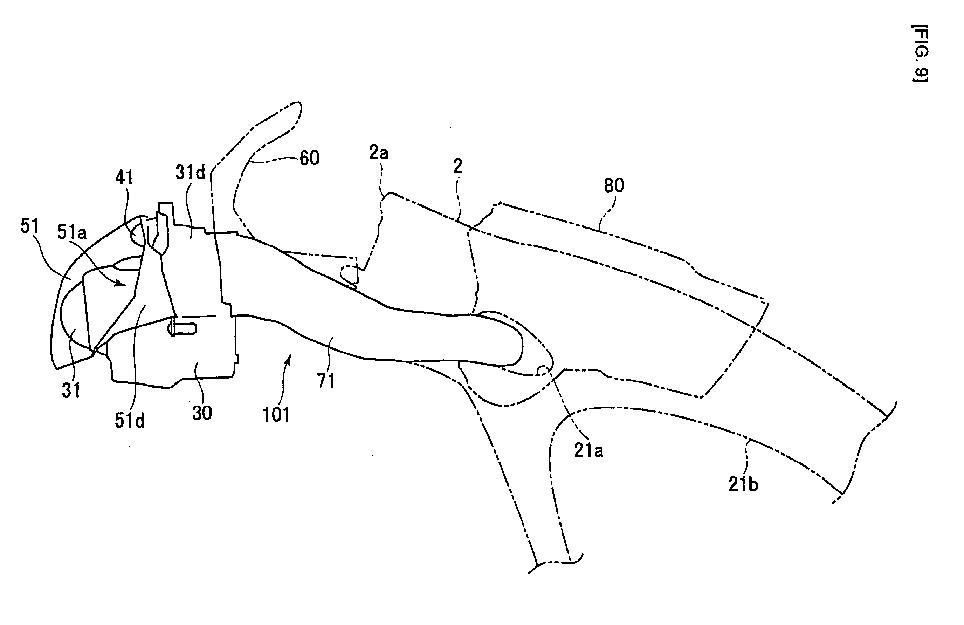

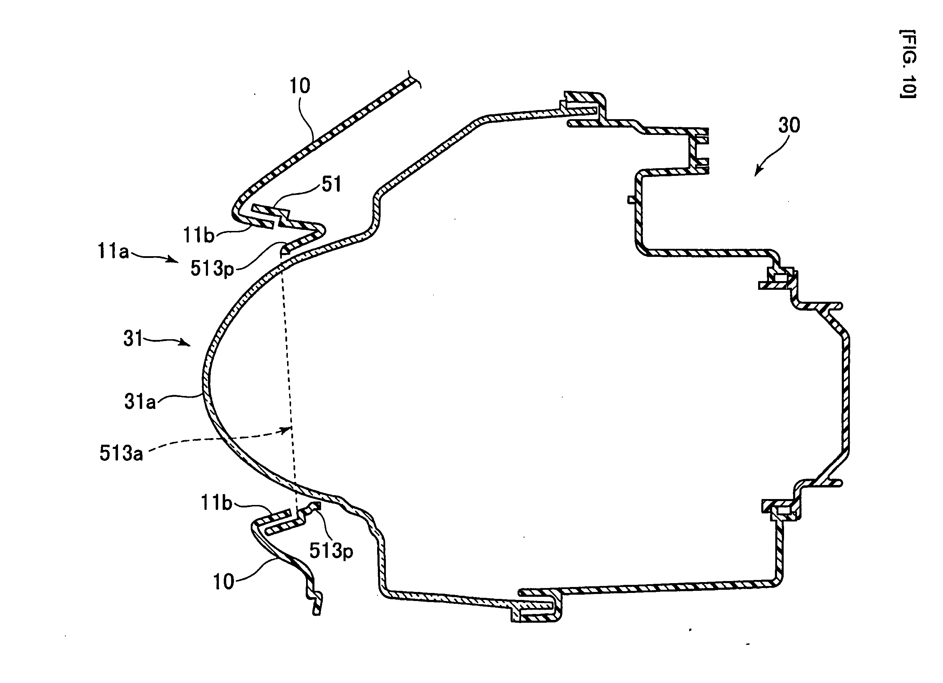

FIGS. 1 and 2, respectively, are a side view and a front view of a motorcycle 1 of one embodiment. FIG. 3 is an explanatory exploded perspective view of a mount structure of a headlight portion 30. FIG. 4 is a front view of the headlight portion 30 to which covers 51 and 53 are mounted. FIG. 5 is a front view of the headlight portion 30. FIG. 6 is a front view of the cover 51. FIG. 7 is a cross-sectional view taken along the line VII-VII of FIG. 6. FIGS. 8 and 9, respectively, are a plan view and a side view for explaining the relation between the headlight portion 30 and intake ducts 101 and 103. FIG. 10 is a cross-sectional view taken along the line X-X of FIG. 2. In FIG. 10, the interior contents of the headlight portion 30 are not shown.

As shown in FIG. 1, the motorcycle 1 includes a twin-spar-type vehicle body frame 2, in which a front fork 3 extending along an obliquely downward direction is supported in a front end portion of the vehicle body frame 2. A front wheel 4 is pivotally supported in a lower end portion of the front fork 3, and a handlebar 5 is mounted in an upper end portion of the front fork 3. Further, a rear arm 7 extending along the forward-rearward direction is supported by a pivot shaft 6 in a rear end portion of the vehicle body frame 2. A rear wheel 8 is pivotally supported in a rear end portion of the rear arm 7.

Further, as shown in FIG. 2, the motorcycle 1 includes a front cowl 10 covering a vehicle body's front portion. The front cowl 10 has a shape that expands slightly rearward on both sides from a central portion in the vehicle width direction. This shape works to reduce the travel wind pressure imposed on the rider during travel. Further, in the front cowl 10, there are formed light-dedicated openings 11a and 13a arranged on both sides sandwiching the center in the vehicle width direction. Each of the light-dedicated openings 11a and 13a has a shape that extends slightly upward the respective lateral side from the central side in the vehicle width direction.

Headlights 31 and 33 are, respectively, provided in positions close to the center in the vehicle width direction in inside of the light-dedicated openings 11a and 13a. Position lamps 41 and 43 (vehicle width indicating lamps) are, respectively, provided in positions on outer sides in the vehicle width direction. The headlights 31 and 33 and the position lamps 41 and 43 are disposed to face frontward, and hence receive a relatively high travel wind pressure during travel of the vehicle. Further, openings 51a and 53a, respectively, communicating to the intake ducts 101 and 103, which are described below, are provided in positions between the headlights 31 and 33 and the position lamps 41 and 43 in inside of the light-dedicated openings 11a and 13a.

As shown in FIG. 3, the headlights 31 and 33 and the position lamps 41 and 43 are provided in the common headlight portion 30 (headlight unit). The front cowl 10 is mounted in such a manner as to cover a front side of the headlight portion 30. Further, the headlight portion 30 is mounted in a front portion of the vehicle body frame 2 via a bracket 60. Here, as shown in FIG. 4, the covers 51 and 53 having shapes corresponding to the respective light-dedicated opening 11a and 13a of the front cowl 10 are mounted in the headlight portion 30.

As shown in FIG. 5, the headlight portion 30 includes a box-shaped portion 30b in the central portion. The headlights 31 and 33 arranged along the vehicle width direction are provided to the front face of the box-shaped portion 30b. Light sources of the respective headlights 31 and 33 and circuits for activating them are stored in the box-shaped portion 30b. The headlights 31 and 33 have substantially hemispheric shapes protruding frontward, thereby to emit headlight beams frontward.

The headlight portion 30 further includes duct portions 31d and 33d on both sides of the box-shaped portion 30b in the vehicle width direction. Each of the duct portions 31d and 33d has a hollow shape having a hollow portion extending along the vehicle forward-rearward direction, thereby forming a midway portion of each of the respective intake ducts 101 and 103 described further below. Further, the duct portions 31d and 33d, respectively, extend slightly upward on the lateral sides of the box-shaped portion 30b in the vehicle width, and end portions thereof are equipped with the respective position lamps 41 and 43. More specifically, the duct portions 31d and 33d, respectively, are support members that support the position lamps 41 and 43 in the positions spaced apart from the headlights 31 and 33 in the vehicle width direction.

Further, the headlight portion 30 includes a mount portion 302a in a central portion of the box-shaped portion 30b. The headlight portion 30 further includes 312b and 312c and 332b and 332c in the upper and lower portions of the respective duct portions 31d and 33d, and is mounted in a screw-fixing manner to the front cowl 10 in those portions.

Further, as shown in FIG. 6, in the cover 51 mounted in the headlight portion 30, a circular light-dedicated opening 513a corresponding to the headlight 31 is formed in a position close to the center in the vehicle width direction. In addition, there is formed a circular lamp-dedicated opening 514a corresponding to the position lamp 41 in a position on the outer side in the vehicle width direction. The cover 51 is mounted to the front side of the headlight portion 30 so that the front portions of the headlight 31 and the position lamp 41 respectively protrude from the light-dedicated opening 513a and the circular lamp-dedicated opening 514a (see FIGS. 4 and 7).

Further, in a portion between the light-dedicated opening 513a and the lamp-dedicated opening 514a, the cover 51 includes a hollow-shaped duct portion 51d extending along a vehicle's rearward direction and penetrating in this direction. The duct portion 51d forms a front end portion of the intake duct 101, which is described further below, and is mounted to a front side of the duct portion 31d of the headlight portion 30 (see FIG. 7). Further, a front end portion of the duct portion 51d forms the opening 51a of the intake duct 101 described further below.

As shown in FIG. 7, in the duct portion 51d, a wall portion 513w on the side of the light-dedicated opening 513a is inclined along a direction departing from an opposite wall portion 514w towards the light-dedicated opening 513a formed in the front end portion. Similarly, also the wall portion 514w (especially a front end portion) on the side of the lamp-dedicated opening 514a is inclined along a direction departing from the opposite wall portion 513w towards the lamp-dedicated opening 514a formed in the front end portion. More specifically, the wall portions 513w and 514w opposite to each other in the vehicle width direction in the duct portion 51d are formed so that the distance therebetween increases frontward.

Further, the light-dedicated opening 513a and the lamp-dedicated opening 514a are, respectively, formed in front end portions of the wall portions 513w and 514w constituting the duct portion 51d, and the front portions of the headlight 31 and the position lamp 41 protrude forward from these openings, respectively. Hence, the front portions of the headlight 31 and the position lamp 41 protrude more frontward than the opening 51a formed in the front end portion of the duct portion 51d and the position lamp 41.

Further, the cover 51 includes an annular protection portion 513p surrounding the light-dedicated opening 513a. The protection portion 513p surrounds the side of a base end of the substantially hemispheric headlight 31 protruding frontward from the light-dedicated opening 513a. The protection portion 513p is disposed so that there is a slight clearance between the protection portion 513p and the headlight 31. The protection portion 513p will be described in more detail below.

Further, in the cover 51, there are formed multiple planar blade portions 51f extending from the side of the headlight 31 to the side of the position lamp 41 and transversely extending across the inside of the duct portion 51d in such a manner as to bridge between the wall portions 513w and 514w constituting the duct portion 51d. The blade portions 51f are partition portions disposed to partition the opening 51a in the front view.

Further, the cover 51 includes on an outer sidewall thereof, mount portions 511a, 511b, and 511c for the use of screw-fixing to the headlight portion 30. The positions thereof correspond to those of mount portions 311a, 311b, and 311c provided in the headlight portion 30 (see FIG. 5).

While the cover 51 mounted to the left side of the headlight portion 30 has been described above, also the cover 53 mounted on the right side has a shape similar thereto.

Next, as shown in FIGS. 8 and 9, ducts 71 and 73 constituting rear half portions of the intake ducts 101 and 103 are, respectively, mounted in rear end portions of the duct portions 31d and 33d provided on both sides of the headlight portion 30 in the vehicle width direction. The ducts 71 and 73 respectively extend rearward and are connected to an air cleaner 80 supported by the vehicle body frame 2.

More specifically, the vehicle body frame 2 includes a cylindrical head pipe 2a supporting the front fork 3 in the front end portion thereof, and main frames 21b and 23b separated leftward and rightward and extending obliquely downward and rearward from the head pipe 2a. The air cleaner 80 is provided between the main frames 21b and 23b. Further, duct openings 21a and 23a allowing for insertion of the ducts 71 and 73 are formed in the main frames 21b and 23b, respectively. The ducts 71 and 73 are bent slightly inward after being passed through both lateral sides of the head pipe 2a and are inserted into the duct openings 21a and 23a, and the rear end portion of the ducts 71 and 73 are connected to the air cleaner 80. The air cleaner 80 filters introduced fresh air and supplies the air into an engine 9 (see FIG. 1).

The intake ducts 101 and 103 are, respectively, configured from, sequentially from the sides of the openings 51a and 53a, the duct portions 51d and 53d formed in the covers 51 and 53, the duct portions 31d and 33d formed in the headlight portion 30, and the ducts 71 and 73.

As shown in FIG. 2, according to the present embodiment, the intake ducts 101 and 103 and the openings 51a and 53a are, respectively, formed between the headlights 31 and 33 and the position lamps 41 and 43 where the travel wind pressure being received during travel is relatively high, so that an even more amount of fresh air can be introduced into the intake ducts 101 and 103. As a consequence, the intake efficiency of the engine 9 can be improved.

Further, as shown in FIG. 7, according to the present embodiment, in the duct portion 51d formed in the cover 51, the front side of the wall portion 513w on the side of the light-dedicated opening 513a is inclined along the direction departing from the wall portion 514w having the front side opposing thereto. Similarly, also the wall portion 514w on the side of the lamp-dedicated opening 514a is inclined along the direction departing from the opposite wall portion 513w having the front side opposing thereto. Thus, the wall portions 513w and 514w opposite to each other in the vehicle width direction in the duct portion 51d forming a front end portion of the intake duct 101 are formed so that the distance therebetween increases frontward. Hence, the area size of the opening 51a formed in the front end portion is increased. Consequently, an increased amount of fresh air can be introduced.

Further, as shown in FIG. 7, according to the present embodiment, the front portions of the respective headlight 31 and position lamp 41 protrude more forward than the opening 51a formed in the front end portion of the duct portion 51d. Hence, as shown in FIG. 7, part of travel wind received by the headlight 31 and the position lamp 41 can be caused to flow along the outer faces thereof into the duct portion 51d. Thereby, a range enabling the introduction of fresh air can be substantially expanded.

Further, as shown in FIG. 5, according to the present embodiment, the position lamps 41 and 43 are, respectively, supported by the duct portions 31d and 33d extending along the vehicle width direction from the headlight portion 30. More specifically, the support members for supporting the position lamps 41 and 43 serve also as parts of the intake ducts 101 and 103, so that the number of components/parts can be reduced.

Further, as shown in FIG. 4, according to the present embodiment, the openings 51a and 53a are, respectively, formed in the covers 51 and 53 mounted to the headlights 31 and 33 and the position lamps 41 and 43 from the front sides. According to the above, the openings 51a and 53a are defined in accordance with the shapes of the covers 51 and 53. Hence, as described above, the area sizes of the respective openings 51a and 53a can easily be increased.

Further, as shown in FIG. 4, according to the present embodiment, the blade portions 51f and 53f (partition portions), which are, respectively, disposed in such a manner to partition the openings 51a and 53a in the front view, are provided in the covers 51 and 53. Hence, relatively large dusts or the like can be prevented from entering inside of the intake ducts 101 and 103. Further, the blade portions 51f and 53f, respectively, have the planar shapes extending along the vehicle's rear side direction (that is, fresh air introduction direction). Hence, fresh air to be introduced into the intake ducts 101 and 103 can be rectified. Further, since the blade portions 51f and 53f are, respectively, provided to extend from the sides of the headlights 31 and 33 to the position lamps 41 and 43, the stiffness therebetween in the vehicle width direction can be increased.

Further, as shown in FIG. 4, according to the present embodiment, the headlight portion 30 includes the two headlights 31 and 33 disposed along the vehicle width direction. In this case, the central portion in the vehicle width direction that includes the headlights 31 and 33 can be expanded to be relatively large. Hence, a relatively large amount of travel wind to be received by the central portion can be directed in the vehicle width direction by the headlights 31 and 33, and can be taken in from the openings 51a and 53a located on the both sides thereof.

As shown in FIG. 10, the headlight portion 30 has, on a front face thereof, a transmissive portion 31a (transmissive cover) having transmissivity, in which the headlight beam is emitted to the outside through the transmissive portion 31a. In the transmissive portion 31a, a surface located more rearward than the light-dedicated opening 513a formed in the cover 51 is coated to prevent leakage of light. Further, the protection portion 513p provided in the cover 51 is interposed between an inner circumference edge portion 11b of the front cowl 10 and the transmissive portion 31a, and covers an area of the transmissive portion 31a exposed to the inner circumference edge portion 11b. Hence, the transmissive portion 31a can be prevented from being damaged by the inner circumference edge portion 11b of the front cowl 10. Further, a material softer than the front cowl 10 is used for the cover 51, thereby making it possible to further prevent the transmissive portion 31a from being damaged.

Further, the protection portion 513p of the cover 51 is disposed to form a small clearance between the protection portion 513p and the inner circumference edge portion 11b of the front cowl 10. Hence, even when the front cowl 10 vibrates during travel, the vibration can be prevented from being transferred to the protection portion 513p, so that the transmissive portion 31a can also be prevented from being damaged by the protection portion 513p.

Further, the protection portion 513p of the cover 51 is disposed also to form a small clearance between the protection portion 513p and the transmissive portion 31a. As described above, in the mount portions 511a, 511b, and 511c, the cover 51 is fixed to the mount portions 311a, 311b, and 311c provided in the headlight portion 30. Hence, even when a vibration is caused during travel, changes in the clearance between the protection portion 513p and the transmissive portion 31a are inhibited. Consequently, even the transmissive portion 31a can be inhibited from being damaged by the protection portion 513p.

Thus there have now been described a motorcycle and a motorcycle front portion including a headlight portion 30 that is provided in the front portion of the vehicle body, that includes on a front face thereof a transmissive portion 31a having transmissivity and that emits the headlight beam to the outside through the transmissive portion 31a; a front cowl 10 that includes the opening 11a in the position corresponding to the transmissive portion 31a and that cover the front portion of the vehicle body; and a cover 51 that is fixed to the mount portions 311a, 311b, and 311c provided in the headlight portion 30 and that is interposed between the inner circumference edge portion 11b of the front cowl forming the opening 11a and the transmissive portion 31a.

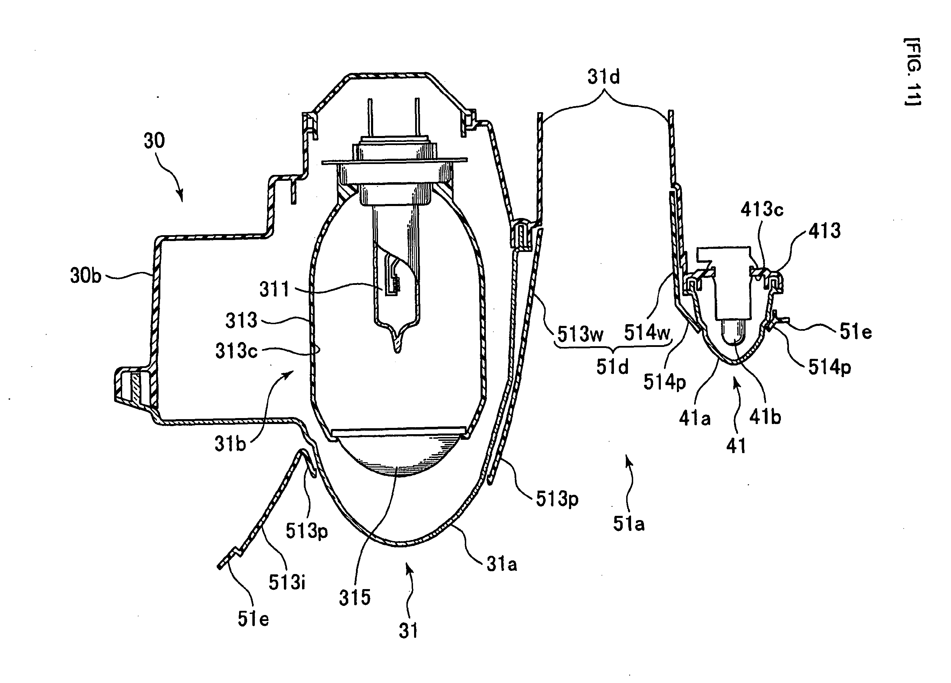

Further practical examples of the headlight portion 30 and the cover 51 will be described herebelow. FIG. 11 is a cross-sectional view taken along the line XI-XI of FIG. 4. While portions of the headlight portion 30 on the vehicle's left side are mainly described below, portions on the vehicle's right side also have configurations similar thereto.

The headlight 31 provided in the headlight portion 30 (body portion) includes a headlight light source 31b in the inside of the box-shaped portion 30b. The headlight 31 is a projector-type light, a bulb 311 is disposed internally of a cover 313 that has a substantially cylindrical shape with a rear end side thereof slightly narrowed, and a substantially hemispheric lens 315 is mounted to a front end portion of the cover 313. Light emitted from the bulb 311 is projected frontward through the lens 315. Further, an inner peripheral surface of the cover 313 is formed as a light reflection portion 313c, in which the light emitted from the bulb 311 is reflected to the lens 315 side.

Further, a portion covering the front side of the headlight light source 31b in the box-shaped portion 30b is used as a substantially hemispheric transmissive cover (first transmissive cover) 31a protruding along the vehicle's frontward direction. The transmissive cover 31a is inserted into the light-dedicated opening 513a (see FIG. 6) provided in the cover 51. Light from the headlight light source 31b is transmitted through the transmissive cover 31a and is then irradiated along the vehicle's frontward direction.

In the present embodiment, while the projector-type light is used as the headlight 31, the light is not limited thereto. For example, the light may be a reflector-type light.

In the headlight portion 30, the position lamp 41, which is provided in a position apart along the vehicle width direction from the headlight 31, includes therein a bulb (light source) 41b. On a front side of the bulb 41b, a substantially hemispheric transmissive cover (second transmissive cover) 41a protruding along the vehicle's frontward direction is provided. The transmissive cover 41a is inserted into the lamp-dedicated opening 514a (see FIG. 6) provided in the cover 51. Light emitted from the bulb 41b is transmitted through the transmissive cover 41a and is then irradiated along the vehicle's frontward direction. Further, a face on the inner side of a mount portion 413 to which the bulb 41b is mounted is used as a light reflection portion 413c, in which the light emitted from the bulb 41b is reflected towards the transmissive cover 41a side.

Even in the case where the bulb 41b is omitted from the position lamp 41, the inside face of the mount portion 413 serves as the light reflection portion 413c. Hence, there is a case where light entered therein from the outside is reflected by the light reflection portion 413c, such that the position lamp 41 appears as being lit.

As shown in FIG. 6, the cover (connecting member) 51 to be mounted to the front side of the headlight portion 30 includes the light-dedicated opening 513a in the position on the central side in the vehicle width direction, and the lamp-dedicated opening 514a in the position on the outer side in the vehicle width direction. The transmissive cover 31a of the headlight 31 and the transmissive cover 41a of the position lamp 41 are, respectively, inserted into the light-dedicated opening 513a and the lamp-dedicated opening 514a.

In the front view, the transmissive cover 31a of the headlight 31 is surrounded by the protection portion 513p, a wall portion 513i on the central side in the vehicle width direction, the wall portion 513w on the outer side in the vehicle width direction, and a part of an edge portion 51e on the central side in the edge portion 51e in the cover 51. They are collectively defined as a first peripheral portion that surrounds the transmissive cover 31a of the headlight 31.

Further, in the front view, the transmissive cover 41a of the position lamp 41 is surrounded by a protection portion 514p, the wall portion 514w on the central side in the vehicle width direction, and a part of the edge portion 51e on the outer side in the vehicle width direction in the cover 51. They are collectively defined as a second peripheral portion that surrounds the transmissive cover 41a of the position lamp 41.

The first peripheral portion and the second peripheral portion are interconnected by the central portion of the edge portion 51e in the vehicle width direction, an upper wall portion 515w and a lower wall portion 516w of the duct portion 51d, and blade portions (beam portions) 51f in the cover 51. They are collectively defined as a connecting portion that interconnects between the first peripheral portion and the second peripheral portion. With the cover 51 configured as described above, the headlight 31 and the position lamp 41 are inter-related in appearance (see FIG. 2).

As shown in FIG. 11, according to the present embodiment, the transmissive covers 31a and 41a as separate bodies are, respectively, provided in the headlight 31 and the position lamp 41. Thereby, increase in the weights of the transmissive covers 31a and 41a can be minimized even in the case where the distance between the headlight 31 and the position lamp 41 is increased. Further, with the provision of the transmissive covers 31a and 41a as separate bodies, visibility of the headlight 31 and the position lamp 41 can be expected to be further improved.

Further, as shown in FIG. 2, since the cover 51 is configured as described above, the headlight 31 and the position lamp 41 can be inter-related in appearance. As a consequence, the headlight 31 and the position lamp 41 can easily be ascertained at one glance.

As shown in FIG. 5, according to the present embodiment, since the headlight 31 and the position lamp 41 are held by the common headlight portion 30, a configuration for supporting the position lamp 41 does not have to be separately provided. Further, since the left and right headlights 31 and 33 are held by the common headlight portion 30, the number of components/parts related to the headlights 31 and 33 can be reduced.

In the present embodiment, while the left and right headlights 31 and 33 and the left and right position lamps 41 and 43 are held by the common headlight portion 30, the configuration is not limited thereto. The left and right headlights 31 and 33 may be separated from each other, or alternatively, the headlights 31 and 33 and the position lamps 41 and 43 may be separated from each other.

Further, as shown in FIG. 6, according to the present embodiment, the cover 51 includes the blade portions (beam portions) 51f extending towards the wall portion 514w on the position lamp 41 side from the wall portion 513w on the headlight 31 side. Hence, the rigidity along the vehicle width direction between the headlight 31 and the position lamp 41 can be enhanced.

Further, as shown in FIG. 6, according to the present embodiment, the cover 51 includes, for example, the protection portion 513p and the edge portion 51e surrounding the transmissive cover 31a of the headlight 31, as the first peripheral portion. Hence, the portions are interposed between the transmissive cover 31a of the headlight 31 and the inner circumference edge portion 11b of the front cowl 10 (see FIG. 10), thereby enabling the transmissive cover 31a to be inhibited from being damaged.

Similarly, the cover 51 includes, for example, the protection portion 514p and the edge portion 51e surrounding the transmissive cover 41a of the position lamp 41, as the second peripheral portion. Hence, the portions are interposed between the transmissive cover 41a of the position lamp 41 and the inner circumference edge portion 11b of the front cowl 10, thereby enabling the transmissive cover 41a to be inhibited from being damaged.

Further, as shown in FIG. 11, according to the present embodiment, the transmissive cover 31a of the headlight 31 and the transmissive cover 41a of the position lamp 41, respectively, have the shapes protruding to the vehicle's front side. Hence, the visibilities of the headlight 31 and the position lamp 41 can be improved.

While the embodiment of the present invention has been described as above, the present invention is not limited thereto, and various modifications can, of course, be carried out by those skilled in the art as defined in the claims.

For example, in the embodiment described above, the covers 51 and 53 are mounted on the front side of the headlight portion 30, but they may be omitted. Even in this case, a portion surrounded by a double-dotted chain line in the headlight portion 30 shown in FIG. 5 appears within the light-dedicated opening 11a of the front cowl 10. Hence, it can be said that the headlight 31 and the position lamp 41 are interconnected in appearance. In other words, the headlight portion 30 can be recognized as a connecting member in such a manner that, in the front face of the body portion 30b, the peripheral portion of the headlight 31 is recognized as the first peripheral portion, the duct portion 31d extending from the body portion 30 to the outer side in the vehicle width direction is recognized as the connecting portion, and an end portion 315d to which the position lamp 41 is mounted is recognized as the second peripheral portion.

### Description of Reference Numerals

1: motorcycle; 2: vehicle body frame; 3: front fork; 4: front wheel; 5: handlebar; 6: pivot shaft; 7: rear arm; 8: rear wheel 8; 9: engine; 10: front cowl; 11a, 13a: light-dedicated opening; 11b: inner circumference edge portion; 30: headlight portion; 31, 33: headlight; 31d, 33d: duct portion (support member); 41, 43 position lamp; 51, 53: cover; 51a, 53a: opening; 51d: duct portion; 51f, 53f blade portion (partition portion, beam portion); 513a: light-dedicated opening; 513p: protection portion; 60: bracket; 71, 73: duct; 80: air cleaner; 101, 103: intake duct; 31a: transmissive cover (first transmissive cover); 31b: headlight light source; 311: bulb; 313: cover; 313c: light reflection portion; 315: lens; 41a: transmissive cover (second transmissive cover); 41b: bulb (light source); 413: mount portion; 413c: light reflection portion; 51e: edge portion; 513i: wall portion; 513p: protection portion (one example of the first peripheral portion); 513w: wall portion; 514p: protection portion (one example of second peripheral portion) ; and 514w: wall portion 514w.

## Claims

1. A motorcycle front portion comprising:
a front cowl (10) configured to cover a front side of a vehicle body;
a left headlight light source (31b) provided on a left side of the motorcycle front portion;
a right headlight light source provided on a right side of the motorcycle front portion, with the left (31b) and right headlight light sources sandwiching a center of the front cowl (10) in a vehicle width direction;
a first transmissive cover (31a) having transmissivity and provided on a front side of each headlight light source ;
a left light reflection portion (413c) provided apart from the left headlight light source (31b) to an outer side in the vehicle width direction on the left side of the motorcycle front portion;
a right light reflection portion provided apart from the right headlight light source to an outer side in the vehicle width direction on the right side of the motorcycle front portion; and
a second transmissive cover (41a) provided on a front side of each light reflection portion ;
**characterized in that**:
the second transmissive cover (41a) is configured as a separate body from the first transmissive cover (31a) on each of the left and right sides of the motorcycle front portion; and
a left connecting member (51) and a right connecting member (53) are provided on the left and right sides respectively of the motorcycle front portion and each connecting member includes a first peripheral portion (513p) that surrounds the respective first transmissive cover (31a), a second peripheral portion (514p) that surrounds the respective second transmissive cover (41a), and a connecting portion (51d, 51f) that interconnects between the first peripheral portion and the second peripheral portion.

2. The motorcycle front portion according to claim 1, wherein, on each of the left and right sides of the motorcycle front portion, the headlight light source (31b) and the light reflection portion (413c) are held by a common body portion.

3. The motorcycle front portion according to claim 1, wherein the left (31b) and right headlight light sources are held by a common body portion.

4. The motorcycle front portion according to claim 1, wherein the left (31b) and right headlight light sources and
the left (413c) and right light reflection portions are held by a common body portion (30).

5. The motorcycle front portion according to any preceding claim, wherein each connecting portion (51d, 51f) includes a beam portion (51f) extending from the respective first peripheral portion (513p) to the respective second peripheral portion (514p).

6. The motorcycle front portion according to any preceding claim, wherein each first peripheral portion (513p) is interposed between the respective first transmissive cover (31a) and the front cowl (10).

7. The motorcycle front portion according to any preceding claim, wherein each second peripheral portion (514p) is interposed between the respective second transmissive cover (41a) and the front cowl (10).

8. The motorcycle front portion according to any preceding claim, wherein each first transmissive cover (31a) has a shape protruding frontward.

9. The motorcycle front portion according to any preceding claim, wherein each second transmissive cover (41a) has a shape protruding frontward.

10. The motorcycle front portion according to any preceding claim, wherein a light source (41b) is provided between each light reflection portion (413c) and the respective second transmissive cover (41a).

11. The motorcycle front portion according to claim 10, wherein, on each of the left and right sides of the motorcycle front portion, the light reflection portion (413c), the second transmissive cover (41a), and the light source (41b) constitute a position lamp (41).

12. A motorcycle (1) comprising the motorcycle front portion of any preceding claim.

## Patentansprüche

1. Vorderteil eines Motorrads umfassend:
eine Frontverkleidung (10) zum Abdecken einer Vorderseite eines Fahrzeugaufbaus,
eine linke Seheinwerferlichtquelle (31b) auf einer linken Seite des Vorderteils eines Motorrads,
eine rechte Scheinwerferlichtquelle auf einer rechten Seite des Vorderteils eines Motorrads, wobei sich in Richtung der Breite des Fahrzeugs zwischen der linken (31 b) und der rechten Scheinwerferlichtquelle eine Mitte der Frontverkleidung (10) befindet,
eine erste durchlässige Abdeckung (31a) mit einer Durchlässigkeit und angeordnet an einer Vorderseite jeder Scheinwerferlichtquelle,
einen linken Lichtreflexionsabschnitt (413c), der von der linken Scheinwerlerlichtquelle (31b) beabstandet zur Außenseite in Richtung der Breite des Fahrzeugs auf der linken Seite des Vorderteils des Motorrads angeordnet ist,
einen rechten Lichtreflexionsabschnitt, der von der rechten Scheinwerferlichtquelle beabstandet zur Außenweite in Richtung der Breite des Fahrzeugs auf der rechten Seite des Vorderteils des Motorrads angeordnet ist, und
eine zweite durchlässige Abdeckung (41a) angeordnet an einer Vorderseite jedes Lichtreflexionsabschnitts,
**dadurch gekennzeichnet, dass**
die zweite durchlässige Abdeckung (41 a) als von der ersten durchlässigen Abdeckung (31a) separates. Teil sowohl auf der linken als auch auf der rechten Seite des Vorderteils des Motorrads ausgestaltet ist, und
ein linkes Verbindungselement (51) und ein rechtes Verbindungselement (53) jeweils auf der linken und rechten Seite des Vorderteils des Motorrads angeordnet sind, wobei jedes Verbindungselement einen ersten Umfangsabschnitt (513p) umfasst, der die entsprechende erste durchlässige Abdeckung (31a) umschließt, einen zweiten Umfangsabschnitt (514p), der die entsprechende zweite durchlässige Abdeckung (41a) umschließt, sowie einen Verbindungsabschnitt (51d, 51f), der den ersten Umfangsabschnitt und den zweiten Umfangsabschnitt miteinander verbindet.

2. Vorderteil eines Motorrads nach Anspruch 1, wobei sowohl auf der linken als auch auf der rechten Seite des Vorderteils des Motorrads die Scheinwerferlichtquelle (31b) und der Lichtreflexionsabschnitt (413c) von einem gemeinsamen Gehäuseabschnitt gehalten werden.

3. Vorderteil eines Motorrads nach Anspruch 1, wobei die linke Scheinwerferlichtquelle (31b) und die rechte Scheinwerferlichtquelle von einem gemeinsamen Gehäuseabschnitt (30) gehalten werden.

4. Vorderteil eines Motorrads nach Anspruch 1, wobei die linke Scheinwerferlichtquelle (31b) und die rechte Scheinwerferlichtquelle sowie der linke Lichtreflexionsabschnitt (413c) und der rechte Lichtreflexionsabschnitt von einem gemeinsamen Gehäuseabschnitt (30) gehalten werden.

5. Vorderteil eines Motorrads nach einem der vorhergehenden Ansprüche, wobei jeder Verbindungsabschnitt (51d, 51f) einen Trägerabschnitt (51f) umfasst, der sich von dem ersten Umfangsabschnitt (513p) zu dem entsprechenden zweiten Umfangsabschnitt (514p) erstreckt.

6. Vorderteil eines Motorrads nach einem der vorhergehenden Ansprüche, wobei der erste Umfangsabschnitt (513p) zwischen der entsprechenden ersten durchlässigen Abdeckung (31a) und der Frontverkleidung (10) angeordnet ist.

7. Vorderteil eines Motorrads nach einem der vorhergehenden Ansprüche, wobei der zweite Umfangsabschnitt (514p) zwischen der entsprechenden zweiten durchlässigen Abdeckung (41a) und der Frontverkleidung (10) angeordnet ist.

8. Vorderteil eines Motorrads nach einem der vorhergehenden Ansprüche, wobei jede erste durchlässige Abdeckung (31a) eine Form aufweist, die nach vorne ragt.

9. Vorderteil eines Motorrads nach einem der vorhergehenden Ansprüche, wobei jede zweite durchlässige Abdeckung (41 a) eine Form aufweist, die nach vorne ragt.

10. Vorderteil eines Motorrads nach einem der vorhergehenden Ansprüche, wobei eine Lichtquelle (41b) zwischen jedem Lichtreflexionsabschnitt (413c) und der entsprechenden zweiten durchlässigen Abdeckung (41a) angeordnet ist.

11. Vorderteil eines Motorrads nach Anspruch 10, wobei sowohl auf der linken als auch auf der rechten Seite des Vorderteils des Motorrads der Lichtreflexionsabschnitt (413c), die zweite durchlässige Abdeckung (41 a) und die Lichtquelle (41 b) eine Positionslampe (41) bilden.

12. Motorrad (1), das das Vorderteil eines Motorrads nach einem der vorhergehenden Ansprüche aufweist.

## Revendications

1. Partie avant d'une motocyclette, comprenant :
un bouclier avant (10) conçu pour couvrir le côté avant de la carrosserie d'un véhicule ;
une source de lumière gauche de phare avant (31b) prévue sur le côté gauche de la partie avant de la motocyclette ;
une source de lumière droite de phare avant prévue sur le côté droit de la partie avant de la motocyclette, les sources de lumière gauche (31b) et droite de phare avant prenant en sandwich le centre du bouclier avant (10) dans le sens de la largeur du véhicule;
un premier cache transmissif (31a) doté de transmissivité et prévu sur le côté avant de chaque source de lumière de phare avant ;
une partie gauche de réflexion de lumière (413c) prévue à l'écart de la source de lumière gauche de phare avant (31b) sur une face externe dans le sens de la largeur du véhicule sur le côté gauche de la partie avant de la motocyclette ;
une partie droite de réflexion de lumière prévue à l'écart de la source de lumière droite de phare avant sur une face externe dans le sens de la largeur du véhicule sur le côté droit de la partie avant de la motocyclette ; et
un second cache transmissif (41a) prévu sur un côté avant de chaque partie de réflexion de lumière ;
**caractérisée en ce que** :
le second cache transmissif (41a) est conçu comme un corps distinct du premier cache transmissif (31a) sur chacun des côtés gauche et droit de la partie avant de la motocyclette ; et
un élément de liaison gauche (51) et un élément de liaison droit (53) sont prévus respectivement sur les côtés gauche et droit de la partie avant de la motocyclette et chaque élément de liaison comprend une première partie périphérique (513p) qui entoure le premier cache transmissif (31a) correspondant, une seconde partie périphérique (514p) qui entoure le second cache transmissif (41a) correspondant, et une partie de liaison (51d, 51f) qui relie la première partie périphérique et la seconde partie périphérique entre elles.

2. Partie avant de motocyclette selon la revendication 1, dans laquelle, sur chacun des côtés gauche et droit de la partie avant de la motocyclette, la source de lumière de phare avant (31b) et la partie de réflexion de lumière (413c) sont maintenues par une partie de carrosserie commune.

3. Partie avant de motocyclette selon la revendication 1, dans laquelle les sources de lumière gauche (31b) et droite de phare avant sont maintenues par une partie de carrosserie commune.

4. Partie avant de motocyclette selon la revendication 1, dans laquelle les sources de lumière gauche (31b) et droite de phare avant et les parties gauche (413c) et droite de réflexion de lumière sont maintenues par une partie de carrosserie commune (30).

5. Partie avant de motocyclette selon l'une quelconque des revendications précédentes, dans laquelle chaque partie de liaison (51d, 51f) comprend une partie formant lamelle (51f) qui s'étend de la première partie périphérique (513p) correspondante à la seconde partie périphérique (514p) correspondante.

6. Partie avant de motocyclette selon l'une quelconque des revendications précédentes, dans laquelle chaque première partie périphérique (513p) s'intercale entre le premier cache transmissif (31a) correspondant et le bouclier avant (10).

7. Partie avant de motocyclette selon l'une quelconque des revendications précédentes, dans laquelle chaque seconde partie périphérique (514p) s'intercale entre le second cache transmissif (41a) correspondant et le bouclier avant (10).

8. Partie avant de motocyclette selon l'une quelconque des revendications précédentes, dans laquelle chaque premier cache transmissif (31a) a une forme en saillie vers l'avant.

9. Partie avant de motocyclette selon l'une quelconque des revendications précédentes, dans laquelle chaque second cache transmissif (41a) a une forme en saillie vers l'avant.

10. Partie avant de motocyclette selon l'une quelconque des revendications précédentes, dans laquelle une source de lumière (41b) est prévue entre chaque partie de réflexion de lumière (413c) et le second cache transmissif (41a) correspondant.

11. Partie avant de motocyclette selon la revendication 10, dans laquelle, sur chacun des côtés gauche et droit de la partie avant de la motocyclette, la partie de réflexion de lumière (413c), le second cache transmissif (41a) et la source de lumière (41b) constituent un feu de position (41).

12. Motocyclette (1) comprenant la partie avant de motocyclette selon l'une quelconque des revendications précédentes.
